# EUROPÄISCHE PATENTANMELDUNG

(11) **EP 2 816 408 A2**
(43) Veröffentlichungstag der Anmeldung: **24.12.2014**
(21) Anmeldenummer: 14167079.4
(22) Anmeldetag: 05.05.2014
(51) Int. Cl.: G03B 21/54, F16M 11/04

(54) **Tafel mit Projektionssystem**

(30) Priorität: 03.05.2013 DE 102013104582
(71) Anmelder: Duraplan GmbH, 80807 München (DE)
(72) Erfinder: Stegner, Michael, 81925 München (DE)
(74) Vertreter: Bettinger Schneider Schramm

(57) **Zusammenfassung**

Bereitgestellt wird eine Halterung (20) zum Anordnen einer Projektionseinrichtung (30) an einer Projektionsfläche (10), wobei
- die Halterung einen ersten Teil (21) und einen zweiten Teil (22) umfasst,
- der erste Teil im Wesentlichen horizontal ausgerichtet ist, in einem vorbestimmten Winkel (α) an dem zweiten Teil angeordnet ist und zur Aufnahme der Projektionseinrichtung ausgestaltet ist, und
- der zweite Teil an einer oberen Stirnfläche (15) der Proj ektionsfläche anordenbar ist und mit einem Verbindungsmittel lösbar mit der Proj ektionsfläche verbindbar ist.

Des Weiteren wird eine im Wesentlich selbstragend ausgestaltete Projektionsfläche (10) bereitgestellt, mit einer oberen Stirnfläche (15), wobei an der oberen Stirnfläche Verbindungsmittel vorgesehen sind zum lösbaren Verbinden einer erfindungsgemäßen Halterung.

## Beschreibung

### Gebiet der Erfindung

Die vorliegende Erfindung betrifft eine Halterung zum Anordnen einer Projektionseinrichtung an einer Projektionsfläche, ein Projektionssystem mit einer erfindungsgemäßen Halterung und einer daran angeordneten Projektionseinrichtung, eine Projektionsfläche an der eine erfindungsgemäße Halterung anordenbar ist, und eine Projektionsvorrichtung mit einer erfindungsgemäßen Projektionsfläche und einer daran anordenbaren erfindungsgemäßen Halterung.

### Stand der Technik und Hintergrund der Erfindung

Projektionssysteme bzw. Präsentationssysteme sind bereits aus dem Stand der Technik bekannt. So sind etwa interaktive Präsentationssysteme bekannt, bei denen eine Tragekonstruktion an der Rückseite einer Wandtafel angeordnet ist, wobei die Tragekonstruktion eine Tragevorrichtung zur Aufnahme einer Projektionseinrichtung, etwa ein Beamer aufweist.

Aus der EP 1 157 304 B1 ist ein Präsentations- bzw. Projektionssystem bekannt, das einen Trägerrahmen umfasst, wobei an der Vorderseite des Trägerrahmens eine Projektionsfläche aus einem flexiblen Material aufgebracht ist. An der oberen Stirnseite des Trägerrahmens ist eine Schwenkvorrichtung mit einem Schwenkarm angeordnet, wobei an dem vorderen Ende des Schwenkarms eine Projektionseinrichtung befestigt ist.

Aus der DE 20 2008 002 222 U1 ist eine Präsentationsvorrichtung bekannt, die eine Projektionsfläche aufweist, die an einer Tragekonstruktion befestigt ist. Über einen Tragarm ist ein Projektor an der Tragekonstruktion befestigt.

Aus der DE 20 2007 010 920 U1 ist ein Präsentationssystem bekannt, bei dem eine Tafel höhenverstellbar ist und bei dem eine Schwenkhalterung vorgesehen ist, die an der Rückseite der Tafel angeordnet ist. An der Schwenkhalterung ist ein Beamer angeordnet, der bei Nichtgebrauch weggeschwenkt werden kann.

Aus der DE 20 2010 005 755 U1 ist ein Präsentationssystem bekannt, welches eine Projektionsfläche aufweist, die an einer Tragekonstruktion höhenverstellbar angeordnet ist. An der Rückseite der Projektionsfläche ist eine senkrechte Stütze angeordnet, die über die obere Stirnfläche der Projektionsfläche hinausragt, wobei und an dem über die Stirnfläche hinausragenden Teil Mittel zur Aufnahme einer Projektionseinrichtung vorgesehen sind.

Die aus dem Stand der Technik bekannten Projektionssysteme haben den Nachteil, dass zum Anordnen der Projektionseinrichtung an der Projektionsfläche Halterungen vorgesehen sind, die an der Rückseite der Projektionsfläche oder an einem Tragegestell befestigt sind, an dem auch die Projektionsfläche befestigt ist. Die Herstellung solcher Präsentationssysteme ist aufgrund der komplexen Anordnung der Einzelteile aufwendig und kostspielig.

Ein weiterer wesentlicher Nachteil der aus dem Stand der Technik bekannten Präsentationssysteme besteht darin, dass die Projektionseinrichtungen und/oder die Halterungen für die Projektionseinrichtungen fest mit der Projektionsfläche oder fest mit einer Trägerkonstruktion verbunden sind, sodass die Projektionseinrichtung nur zusammen mit der Projektionsfläche verwendet werden kann, an der die Projektionseinrichtung befestigt ist.

### Aufgabe der Erfindung

Aufgabe der Erfindung ist es daher, Lösungen bereitzustellen, die einen flexiblen Einsatz eines Projektionssystems, insbesondere an unterschiedlichen Projektionsflächen ermöglichen, wobei der konstruktive Aufwand zur Herstellung einer Projektionsvorrichtung reduziert wird.

### Erfindungsgemäße Lösung

Gelöst wird diese Aufgabe durch eine Halterung zum Anordnen einer Projektionseinrichtung an einer Projektionsfläche, ein Projektionssystem, eine Projektionsfläche sowie eine Projektionsvorrichtung gemäß den unabhängigen Ansprüchen. Vorteilhafte Ausgestaltungen und Weiterbildungen der Erfindung sind in den jeweiligen abhängigen Ansprüchen angegeben.

Bereitgestellt wird demnach eine Halterung zum Anordnen einer Projektionseinrichtung an einer Projektionsfläche, wobei die Halterung einen ersten Teil und einen zweiten Teil umfasst, wobei der erste Teil im Wesentlichen horizontal ausgerichtet ist, in einem vorbestimmten Winkel an dem zweiten Teil angeordnet ist und zur Aufnahme der Projektionseinrichtung ausgestaltet ist, und wobei der zweite Teil an einer oberen Stirnfläche der Projektionsfläche anordenbar ist und mit einem Verbindungsmittel lösbar mit der Projektionsfläche verbindbar ist.

Das Verbindungsmittel kann eine am zweiten Teil quer zur Längsachse der Halterung verlaufende durchlaufende Nut umfassen, in die die obere Stirnfläche der Projektionsfläche im Wesentlichen formschlüssig in Eingriff bringbar ist.

Dadurch kann die Halterung an der oberen Stirnfläche bzw. oberen Stirnseite der Projektionsfläche aufgesetzt werden, wobei durch den Formschluss der in der Nut in Eingriff gebrachten oberen Stirnfläche bzw. oberen Stirnseite ein Kippen der aufgesetzten Halterung selbst bei einer an der Halterung angeordneten Projektionseinrichtung verhindert wird. Zudem kann die Halterung besonders einfach von der Projektionsfläche gelöst werden, indem die Projektionsfläche aus der Nut herausgezogen wird. Ein weiterer Vorteil besteht darin, dass aufgrund der einfachen Befestigung der Halterung an der Projektionsfläche und aufgrund des einfachen Lösens der Halterung von der Projektionsfläche die Halterung an unterschiedlichen Projektionsflächen aufgesetzt werden kann, sodass für eine Vielzahl von Projektionsflächen nur eine kleine Anzahl von Halterungen vorgesehen werden müssen.

Das Verbindungsmittel kann ein senkrecht zur oberen Stirnfläche der Projektionsfläche verlaufendes Sackloch umfassen, zur Aufnahme eines an der oberen Stirnfläche der Projektionsfläche angeordnetes Befestigungsmittel, etwa ein Bolzen oder Zapfen.

In einer Ausgestaltung der Erfindung kann in der Nut zumindest eine senkrecht zur Längsachse der Nut verlaufendes Sackloch ausgebildet sein, wobei das zumindest eine Sackloch zur Aufnahme eines an der oberen Stirnfläche der Projektionsfläche angeordnetes Befestigungsmittel vorgesehen ist. Dadurch kann die Stabilität einer an der Projektionsfläche angebrachten bzw. an der Stirnfläche der Projektionsfläche aufgesetzten Halterung weiter verbessert werden.

In der Nut kann zumindest ein senkrecht zur Längsachse der Nut stehendes Befestigungsmittel, etwa ein Zapfen oder Bolzen, angeordnet sein.

Das Verbindungsmittel kann ein senkrecht zur oberen Stirnfläche der Projektionsfläche angeordnetes Befestigungsmittel umfassen.

Vorteilhaft ist es, wenn der zweite Teil der Halterung als Gehäuse ausgebildet ist, wobei im Inneren des Gehäuses eine Datenverarbeitungseinrichtung anordenbar ist, die, vorzugsweise über ein zweites Daten- und/oder Stromkabel operativ mit der Projektionseinrichtung koppelbar ist. In einer Ausgestaltung der Erfindung kann die Übertragung von Daten zwischen der Datenverarbeitungseinrichtung und der Projektionseinrichtung auch über eine drahtlose Schnittstelle, etwa WLAN oder Bluetooth, erfolgen.

Vorteilhaft ist es, wenn der als Gehäuse ausgebildete zweite Teil der Halterung eine Öffnung aufweist, durch die ein erstes Daten- und/oder Stromkabel hindurchführbar ist.

In einer vorteilhaften Ausgestaltung kann das Gehäuse eine Zugangsöffnung aufweisen, durch die Peripherieanschlüsse der Datenverarbeitungseinrichtung von außen zugänglich sind.

Das Vorsehen der Datenverarbeitungseinrichtung in dem zweiten Teil der Halterung hat den Vorteil, dass keine externe Datenverarbeitungseinrichtung vorgesehen werden muss, die über zusätzliche Datenkabel mit der Projektionseinrichtung verbunden werden muss, was die Montage einer Projektionsvorrichtung an einer Projektionsfläche aufwendig und kompliziert macht, da sowohl das Stromanschlusskabel für den Projektor als auch das Datenkabel derart an der Projektionsfläche angeordnet werden müssen, um einerseits ein teilweise verdecken der Projektionsfläche zu verhindern und andererseits ein möglich sicheres Anschließen des Projektors zu gewährleisten, was insbesondere im Schulbereich von besonderer Bedeutung ist.

Vorteilhaft ist es, wenn in bzw. an der Halterung Arretiermittel vorgesehen sind, zum Arretieren der Halterung an der oberen Stirnfläche der Projektionsfläche. Damit kann ein unbeabsichtigtes Lösen der Halterung von der Projektionsfläche effektiv verhindert werden.

In einer vorteilhaften Ausgestaltung der erfindungsgemäßen Halterung umfassen die Arretiermittel einen Arretierbolzen bzw. Arretierzapfen, der in eine randseitige Ausnehmung eines an der oberen Stirnfläche der Projektionsfläche angeordneten Befestigungsmittel in Eingriff bringbar ist, wenn das Befestigungsmittel in dem Sackloch angeordnet ist.

Das Arretiermittel kann ein Federelement umfassen, mit dem der Arretierbolzen bzw. Arretierzapfen in die randseitige Ausnehmung des Befestigungsmittels gedrückt wird. Zum Lösen der Halterung von der Projektionsfläche muss lediglich der Arretierbolzen gegen die Federkraft aus der randseitigen Ausnehmung des Befestigungsmittels herausgezogen werden.

In einer Ausgestaltung der erfindungsgemäßen Halterung kann diese einen Schließmechanismus umfassen, der ein unberechtigtes Lösen der Halterung von der Projektionsfläche verhindert.

Der Schließmechanismus kann in den Arretierbolzen bzw. Arretierzapfen integriert sein und in einer Schließposition ein Bewegen des Arretierbolzens bzw. Arretierzapfens gegen die Federkraft des Federelements verhindern.

In einer vorteilhaften Ausgestaltung der Erfindung sind der erste Teil und der zweite Teil der Halterung einteilig ausgestaltet.

In einer Ausgestaltung der Erfindung kann an dem ersten Teil der Halterung ein Drehmittel vorgesehen sein, an dem die Projektionseinrichtung vorzugsweise lösbar befestigbar ist und mit dem die Projektionseinrichtung um eine senkrecht zum ersten Teil stehende Drehachse drehbar ist.

Vorteilhaft ist es, wenn an oder in der Halterung, vorzugsweise an oder in dem zweiten Teil der Halterung eine Detektionseinrichtung vorgesehen ist, wobei die Detektionseinrichtung angepasst ist, einen sich relativ zur Projektionsfläche bewegenden oder an der Projektionsfläche angeordneten Gegenstand, insbesondere Finger oder Stift zu detektieren.

Die Detektionseinrichtung kann zumindest eine Sendeeinheit und zumindest eine Empfangseinheit umfassen, wobei die Sendeeinheit angepasst ist, vor der Projektionsfläche in einem vorbestimmten Abstand und im Wesentlichen parallel zur Projektionsfläche einen Lichtvorhang aus Lichtstrahlen zu erzeugen, der die Projektionsfläche weitestgehend abdeckt, wobei die Empfangseinheit angepasst ist, von dem Gegenstand reflektierte Lichtstrahlen zu empfangen.

Besonders vorteilhaft ist es, wenn die Detektionseinrichtung angepasst ist, die reflektierten Lichtstrahlen auszuwerten und aus den reflektierten Lichtstrahlen eine Position des Gegenstandes oder Positionen mehrerer Gegenstände relativ zur Projektionsfläche zu ermitteln.

Bereitgestellt wird des Weiteren ein Projektionssystem, das eine erfindungsgemäße Halterung und eine Projektionseinrichtung, etwa ein Projektor, umfasst, wobei die Projektionseinrichtung an dem ersten Teil, vorzugsweise an einer Unterseite des ersten Teils, angeordnet ist.

Bereitgestellt wird ferner eine Projektionsfläche, die im Wesentlichen selbsttragend ausgestaltet ist und eine obere Stirnfläche bzw. eine obere Stirnseite aufweist, an der oberen Stirnfläche Verbindungsmittel vorgesehen sind zum lösbaren Verbinden einer erfindungsgemäßen Halterung mit der Projektionsfläche.

Die Verbindungsmittel können Befestigungsmittel umfassen, die im Wesentlichen senkrecht auf der Stirnfläche stehen.

Dadurch, dass die Projektionsfläche selbsttragend ausgestaltet ist, müssen keine weiteren Vorkehrungen getroffen werden, um eine erfindungsgemäße Halterung stabil an der Projektionsfläche anzuordnen bzw. an der oberen Stirnfläche aufzusetzen.

Vorteilhaft ist es, wenn die Befestigungsmittel zwischen einer Vorderseite der Projektionsfläche und einer Rückseite der Projektionsfläche in die Projektionsfläche integriert sind und zumindest teilweise aus der oberen Stirnfläche herausragen. Durch die in die Projektionsfläche integrierten Befestigungsmittel wird einerseits der Bereich der Projektionsfläche, an der die Halterung angeordnet wird, zusätzlich verstärkt und andererseits wird die Stabilität der Anordnung der Befestigungsmittel an der Projektionsfläche erhöht.

Die Befestigungsmittel können Bolzen oder Zapfen umfassen, die vorzugsweise einen runden oder rechteckigen Querschnitt aufweisen.

Die Verbindungsmittel können eine Nut umfassen, die längs an der oberen Stirnfläche der Projektionsfläche ausgebildet ist.

Vorteilhaft ist es, wenn die Befestigungsmittel an dem über die Stirnfläche hinausragenden Abschnitt eine randseitige Ausnehmung bzw. Aussparung aufweisen, zur Aufnahme eines Arretierbolzens einer erfindungsgemäßen Halterung.

Vorteilhaft ist es, wenn die Projektionsfläche in Kombination mit einer Projektionseinrichtung Mittel zur interaktiven Bedienung einer Datenverarbeitungseinrichtung bereitstellt.

Des Weiteren wird eine Projektionsvorrichtung umfassend eine Projektionsfläche, insbesondere erfindungsgemäße Projektionsfläche und eine erfindungsgemäße Halterung bereitgestellt, wobei eine obere Stirnfläche der Projektionsfläche in Eingriff mit der durchlaufenden Nut der Halterung bringbar ist.

An dem ersten Teil der Halterung kann eine Projektionseinrichtung, etwa ein Projektor, angeordnet sein.

In einer vorteilhaften Ausgestaltung der Erfindung ist die Projektionsfläche höhenverstellbar.

### Kurzbeschreibung der Figuren

Weitere Einzelheiten und Merkmale sowie konkrete Vorteile der Erfindung ergeben sich aus der nachfolgenden Beschreibung in Verbindung mit der Zeichnung. Es zeigt:
- Fig. 1: ein erfindungsgemäßes Projektionssystem in einer Seitenansicht;
- Fig. 2: eine erfindungsgemäße Projektionsvorrichtung in einer Ansicht von hinten;
- Fig. 3: eine alternative Ausgestaltung eines erfindungsgemäßen Projektionssystems in einer Seitenansicht;
- Fig. 4: eine Detailansicht einer erfindungsgemäßen Halterung an einer oberen Stirnfläche einer erfindungsgemäßen Projektionsfläche;
- Fig. 5: eine konkrete Ausgestaltung eines erfindungsgemäßen Projektionssystems in einer perspektivischen Ansicht;
- Fig. 6: eine konkrete Ausgestaltung eines erfindungsgemäßen Projektionssystems in einer Seitenansicht;
- Fig. 7: eine konkrete Ausgestaltung einer erfindungsgemäßen Projektionsvorrichtung in einer perspektivischen Ansicht;
- Fig. 8: eine konkrete Ausgestaltung eines erfindungsgemäßen Projektionssystems in einer Draufsicht; und
- Fig. 9: eine alternative Ausgestaltung eines erfindungsgemäßen Projektionssystems in einer Seitenansicht, wobei in der erfindungsgemäßen Halterung eine Detektionseinrichtung zur Detektion eines Gegenstandes relativ zur Projektionsfläche vorgesehen ist.

### Detaillierte Beschreibung der Erfindung

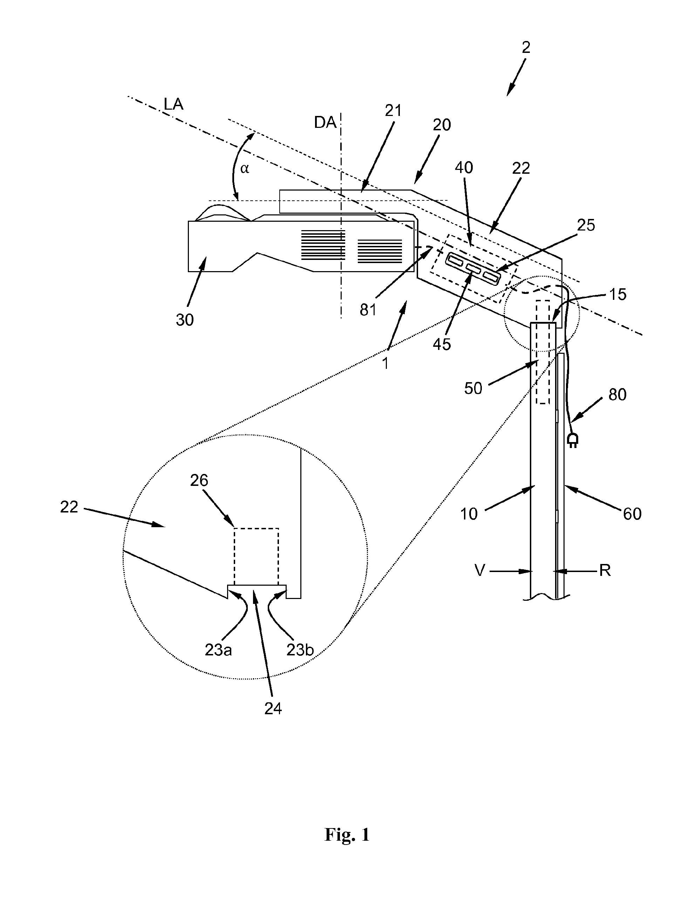

**Fig. 1** zeigt eine erfindungsgemäße Projektionsvorrichtung 2 in einer Seitenansicht.

Die Projektionsvorrichtung 2 umfasst ein Projektionssystem 1, das eine Halterung 20 und eine an der Halterung 20 angeordnete Projektionseinrichtung, etwa ein Beamer oder Projektor, umfasst, und eine Projektionsfläche 10, an der die Halterung 20 an der oberen Stirnfläche bzw. an der oberen Stirnseite 15 angeordnet ist. Die konkrete Ausgestaltung der Halterung 20 im Bereich der oberen Stirnfläche 15 ist in Fig. 1 vergrößert dargestellt.

Die Halterung 20 umfasst einen ersten Teil 21 und einen zweiten Teil 22, wobei der erste Teil 21 im Wesentlichen horizontal ausgerichtet ist und wobei an der Unterseite des ersten Teils 21 die Projektionseinrichtung 30 angeordnet bzw. befestigt ist. Die Befestigung der Projektionseinrichtung 30 an dem ersten Teil 21 der Halterung kann etwa über Schwenkmittel erfolgen, sodass die Projektionseinrichtung 30 um eine Drehachse DA in einer Ebene gedreht bzw. geschwenkt werden kann.

Der erste Teil 21 der Halterung ist in einem Winkel α an dem zweiten Teil 22 der Halterung angeordnet, sodass der Winkel zwischen dem zweiten Teil 22 der Halterung und der Projektionsfläche 10 größer 90° ist. Dadurch ist gewährleistet, dass die gesamte Fläche der Projektionsfläche 10 als Projektionsfläche zur Verfügung steht.

Der zweite Teil 22 der Halterung 20 weist im unteren Bereich eine durchlaufende Nut 24 auf, die quer zur Längsachse LA der Halterung 20 verläuft. Die Nut 24 ist so ausgestaltet, dass die obere Stirnfläche 15 bzw. die obere Stirnseite der Projektionsfläche 10 im Wesentlichen formschlüssig in die Nut 24 in Eingriff gebracht werden kann. Durch den Formschluss ist gewährleistet, dass die Halterung 20 stabil auf der Projektionsfläche 10 aufgesetzt werden kann. Durch die Nut 24 werden in dem zweiten Teil 22 der Halterung ein in die Vorderseite der Projektionsfläche 10 hineinragender Teil 23a und ein in die Rückseite der Projektionsfläche hineinragender Teil 23b ausgebildet, die an der Vorderseite bzw. an der Rückseite der Projektionsfläche aufliegen.

In Abhängigkeit von der Stabilität der Projektionsfläche 10, insbesondere eines oberen Abschnittes der Projektionsfläche 10 kann die Nut 24 unterschiedlich tief dimensioniert sein.

Um eine möglichst geringe Tiefe der Nut 24 vorsehen zu müssen, sind in die Projektionsfläche 10 Befestigungsmittel integriert, die zumindest teilweise aus der oberen Stirnfläche 15 der Projektionsfläche 10 herausragen. Die Befestigungsmittel 15 können beispielsweise als zylindrische Bolzen bzw. Zapfen ausgestaltet sein. Die Bolzen bzw. Zapfen 50 werden in dafür vorgesehene Sacklöcher 26 in Eingriff gebracht, die in der Nut und senkrecht zur Längsachse der Nut verlaufend ausgebildet sind. Durch den an der oberen Stirnfläche 15 überstehenden Teil der Befestigungsmittel 50 wird die an der Projektionsfläche 10 aufgesetzte Halterung zusätzlich bzw. noch weiter stabilisiert, sodass die erforderliche Tiefe der Nut ebenfalls reduziert werden kann. Vorteilhaft ist es, wenn die Bolzen bzw. Zapfen 50 aus Metall oder einem vergleichbar stabilem Material sind.

Mehrere in die Projektionsfläche 10 integrierte Befestigungsmittel 15 können in der Projektionsfläche mittels Querstreben miteinander verbunden sein, was einerseits die Stabilität der Befestigungsmittel und andererseits die Stabilität des oberen Bereiches der Projektionsfläche 10 erhöht.

In einer Ausgestaltung der Erfindung kann auf die Nut 24 auch vollständig verzichtet werden was, letztlich von der Stabilität bzw. Steifigkeit der Halterung bzw. der Befestigungsmittel abhängt.

Der zweite Teil 22 der Halterung 20 kann als Gehäuse ausgebildet sein, wobei im Inneren des Gehäuses eine Datenverarbeitungseinrichtung 40 angeordnet sein kann. An dem als Gehäuse ausgebildeten zweiten Teil 22 kann eine Zugangsöffnung 25 vorgesehen sein, um Peripherieanschlüsse 45 der Datenverarbeitungseinrichtung von außen zugänglich zu machen. Vorzugsweise ist die Zugangsöffnung 25 mit einer Klappe oder dergleichen verschließbar, wobei die Klappe auch abschließbar sein kann. An der Datenverarbeitungseinrichtung 40 angeschlossene Kabel, etwa Strom- und/oder Datenkabel 80 können an einer Rückseite des zweiten Teils 22 herausgeführt sein, sodass die Kabel an der Rückseite der Projektionsfläche 10 nach unten, etwa zu einer Steckdose, geführt werden können.

Ferner ist die Datenverarbeitungseinrichtung 40 über Strom- und/oder Datenkabel 81 mit der Projektionseinrichtung 30 verbunden, um etwa die an die Projektionsfläche 10 zu projizierenden Daten an die Projektionseinrichtung 30 zu übertragen. Die Projektionseinrichtung 30 kann über ein eigenes Stromkabel verfügen, das durch das Gehäuse 22 geführt ist und an der Rückseite des Gehäuses 22 herausgeführt ist. Die Übertragung der auf die Projektionsfläche 10 zu projizierenden Daten an die Projektionseinrichtung 30 kann auch über eine drahtlose Datenverbindung, etwa WLAN oder Bluetooth, erfolgen.

In einer Ausgestaltung der Erfindung ist die Halterung aus einem Metall, etwa Aluminium, gefertigt.

Gemäß einer bevorzugten Ausführungsform der vorliegenden Erfindung ist die Projektionseinrichtung 30 in Kombination mit der Projektionsfläche 10 mit interaktiven Funktionen ausgebildet. Dadurch kann die Projektionsvorrichtung 2 als Mittel zur interaktiven Bedienung einer elektronischen Datenverarbeitungsvorrichtung, etwa der in der Halterung integrierten Datenverarbeitungseinrichtung 40 verwendet werden. Auf diese Weise ist die Projektionsvorrichtung 2 in einer Kombination aus Projektionsfläche 10 und Projektor 30 einsetzbar. Als Projektor 30 kann beispielsweise ein Beamer verwendet werden, der von der Datenverarbeitungseinrichtung 40 erzeugte Bildinhalte optisch auf die Projektionsfläche 10 projiziert. Bei der Projektionsvorrichtung 2 nach der vorliegenden Erfindung wird vorzugsweise ein Projektor 30 mit Infrarot-Sensoren verwendet, um die Position eines Bedienelements auf der Projektionsfläche 10 ermitteln zu können.

Die Projektionsfläche 10 kann beispielsweise als sogenanntes Whiteboard ausgebildet sein, mit dessen Hilfe über sensorische Bedienelemente interaktiv Funktionen der Datenverarbeitungseinrichtung 40 gesteuert werden können. Als sensorische Bedienelemente können beispielsweise induktive Signalgeber verwendet werden oder sensorische Stifte mit Infrarotsendern, deren Position über entsprechende Infrarot-Kameras erfasst werden. In einer Ausgestaltung der Erfindung können die Infrarot-Kameras ebenfalls an der Halterung 20 angeordnet sein.

Durch die Software der Datenverarbeitungseinrichtung 40 sind definierten Positionen oder Funktionsflächen auf der Projektionsfläche 10 bestimmte Funktionen zugeordnet, die bei Berührung der betreffenden Funktionsflächen ausgelöst werden. Wenn das sensorische Bedienelement beispielsweise mit der Spitze auf der Projektionsfläche 10 bzw. auf der Funktionsfläche in dem auf die Projektionsfläche projizierten Bild aufsetzt, wird die Position des Bedienelements induktiv oder mit Hilfe der Infrarot-Kameras ermittelt und die der betreffenden Funktionsfläche zugeordnete Funktion der Datenverarbeitungseinrichtung 40 kommt zur Ausführung. Auf diese Weise kann die erfindungsgemäße Projektionsvorrichtung 2 zu beliebigen Präsentationszwecken interaktiv verwendet werden.

Die Projektionsfläche 10 kann höhenverstellbar an Laufschienen 60 befestigt sein. Die Laufschienen 60 können beispielsweise als Wandschienen ausgebildet sein, sodass die Projektionsfläche 10 höhenverstellbar an einer Wand montiert werden kann. Die Laufschienen 60 können auch Bestandteil eines fahrbaren Untergestells sein, sodass eine mobile Projektionsvorrichtung bereitgestellt wird.

In einer alternativen, hier nicht gezeigten Ausgestaltung der Erfindung, kann die Nut auch an der Stirnfläche 15 der Projektionsfläche 10 vorgesehen sein und an der Halterung 20 kann eine entsprechende Feder (einer Nut-Feder-Verbindung) vorgesehen sein, die in Eingriff mit der Nut an der Stirnfläche 15 gebracht werden kann.

Die Bolzen bzw. Zapfen 50 können auch an der Halterung 20 vorgesehen sein, wobei die Bolzen bzw. Zapfen 50 in entsprechende Sacklöcher an der Stirnfläche 15 der Projektionsfläche 10 in Eingriff bringbar sind.

Die Bolzen bzw. Zapfen 50 können auch in der Nut an Halterung angeordnet sein, wobei die Bolzen bzw. Zapfen 50 in entsprechende Sacklöcher an der Stirnfläche 15 der Projektionsfläche 10 in Eingriff bringbar sind.

In einer besonderen Ausgestaltung können sowohl an der Stirnfläche 15 der Projektionsfläche 10 als auch an der Halterung 20 Bolzen bzw. Zapfen 50 vorgesehen sein, die dann in jeweils an der Halterung bzw. Stirnfläche vorgesehene Sacklöcher in Eingriff gebracht werden können.

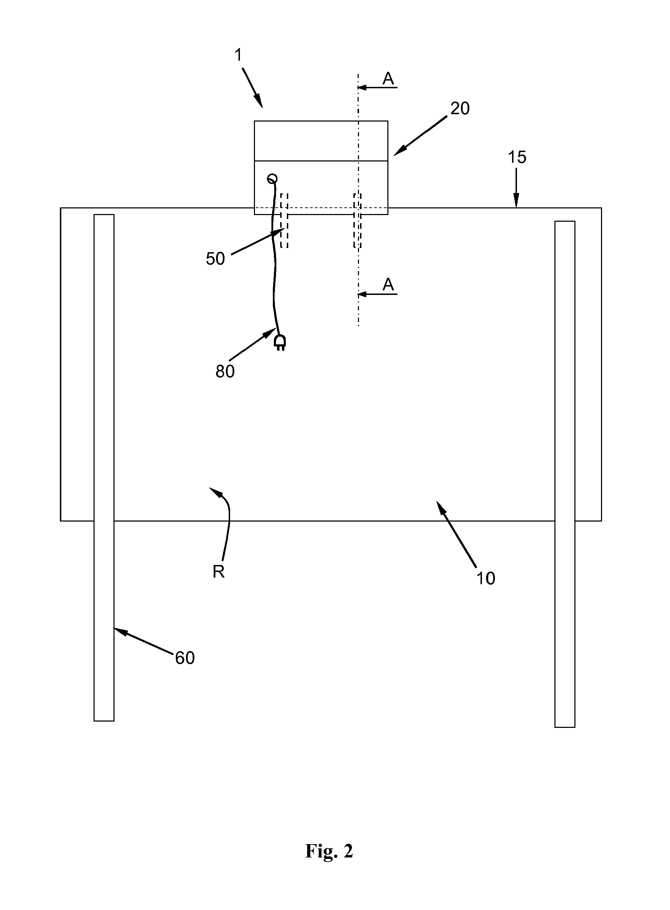

Fig. 2 zeigt eine erfindungsgemäße Projektionsvorrichtung in einer Ansicht von hinten.

Die Projektionsfläche 10 ist mit ihrer Rückseite R an zwei Laufschienen höhenverstellbar befestigt. An der oberen Stirnfläche 15 bzw. an der oberen Stirnkante der Projektionsfläche 10 ist die Halterung 20 aufgesetzt, sodass die an der oberen Stirnfläche 15 vorgesehenen Befestigungsmittel 15 in dafür vorgesehene Sacklöcher der Halterung 20 in Eingriff gebracht sind.

Weil die Halterung 20 direkt an der oberen Stirnfläche 15 der Projektionsfläche 10 befestigt ist, wird die an der Halterung 20 angeordnete Projektionseinrichtung 30 eine Höhenveränderung der Projektionsfläche 10 identisch nachvollziehen, sodass bei einer Veränderung der Höheneinstellung der Projektionsfläche die relative Anordnung der Projektionseinrichtung 30 zur Projektionsfläche 10 und damit der optimale Abstand zwischen Projektionseinrichtung 30 und der Projektionsfläche 10 unverändert bleiben. Diese Bedingung ist bei der hochsensiblen Optik interaktiver Projektoren mit einer Positionserfassung der Eingabemittel von großer Bedeutung für deren Bildqualität und für deren interaktive Funktionssicherheit.

Die beiden in der Projektionsfläche 10 integrierten Befestigungsmittel bzw. Bolzen oder Zapfen 50 können in der Projektionsfläche 10 über eine oder mehrere Querstreben (die in Fig. 2 nicht gezeigt sind) miteinander verbunden sein, was einerseits die Stabilität der Befestigungsmittel 50 erhöht und andererseits die Steifigkeit der Projektionsfläche 10 im Bereich der Befestigungsmittel verbessert.

Die Projektionsfläche 10 ist erfindungsgemäß als selbsttragende Projektionsfläche ausgestaltet, sodass an der oberen Stirnfläche 15 der Projektionsfläche 10 die Halterung 20 angeordnet werden kann, ohne zusätzliche Stabilisierungsmaßnahmen der Projektionsfläche vorsehen zu müssen.

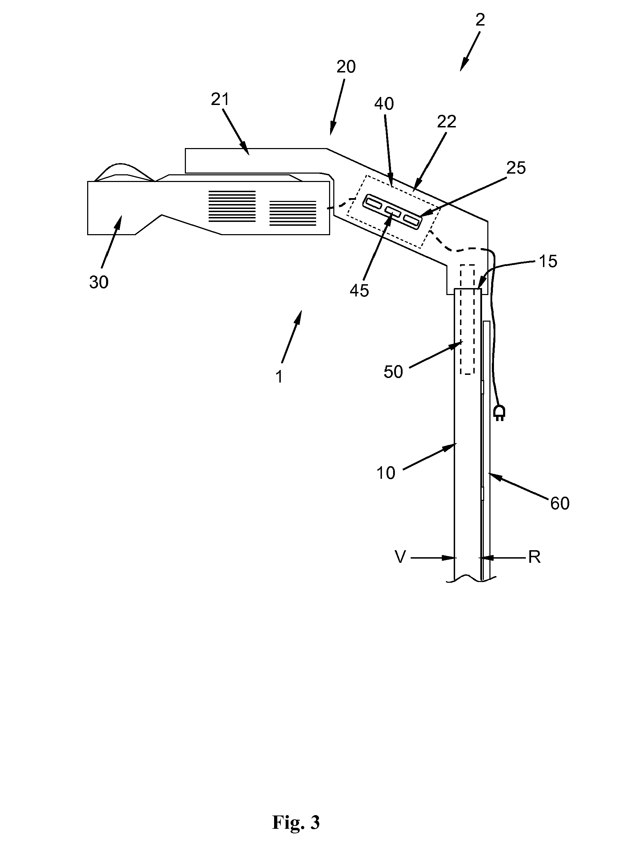

**Fig. 3** zeigt eine erfindungsgemäße Projektionsvorrichtung 10 in einer Seitenansicht, wobei die Halterung 20 im unteren Bereich des zweiten Teils 22 alternativ ausgestaltet ist.

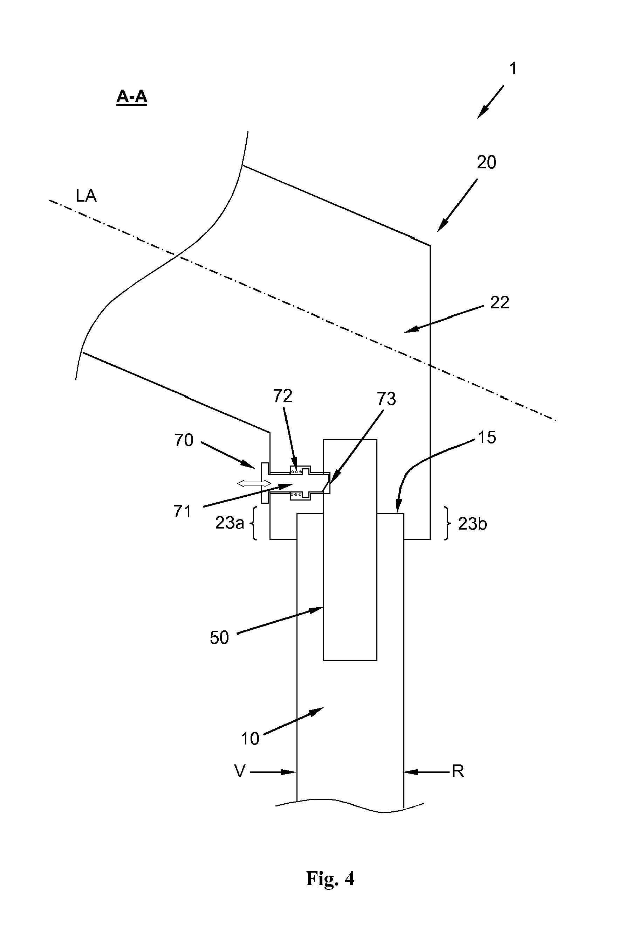

Ein unterer Abschnitt des zweiten Teils 22 der Halterung 20, d.h., der Abschnitt, der auf die obere Stirnfläche 15 der Projektionsfläche aufgesetzt wird, weist zwei parallele und parallel zur Längsachse der Nut 24 verlaufende Seitenwandungen auf, an die die schräg nach vom geneigte untere Wandung bzw. obere Wandung des zweiten Teils 22 anschließen. Dies hat den Vorteil, dass in dem parallel zur Projektionsfläche 10 verlaufenden Abschnitt des untern Teils 22 der Halterung 20 Arretiermittel vorgesehen werden können, die von vorne zugänglich und bedienbar sind, wie mit Bezug auf Fig. 4 beschrieben.

Fig. 4 zeigt einen unteren Abschnitt des zweiten Teils 22 der Halterung 20 in einer Schnittansicht entlang der Schnittachse A-A.

Im Bereich der oberen Stirnfläche 15 der Projektionsfläche 10 weist die Halterung 20 zwei Seitenwandungen auf, die parallel zueinander und parallel zur Längsachse der Nut 24 verlaufen. Die unteren Enden 23a, 23b der Halterung 20 ragen in die Vorderseite V bzw. in die Rückseite R der Projektionsfläche 15 hinein.

Das in die Projektionsfläche 10 integrierte Befestigungsmittel 50 steht an der oberen Stirnfläche 15 der Projektionsfläche 10 hervor und ragt in ein Sackloch 26 hinein, das in der Nut 24 ausgebildet ist.

An der Vorderseite des zweiten Teils 22 der Halterung 20, d.h. an der parallel zur Längsachse der Nut 24 verlaufenden Seitenwandung der Halterung ist ein Arretiermittel 70 vorgesehen, mit dem ein unbeabsichtigtes Lösen der Halterung 20 von der Projektionsfläche 10 verhindert werden kann. Das Arretiermittel umfasst in der hier gezeigten Ausführungsform einen Arretierbolzen bzw. Arretierzapfen 71 und ein Federelement 72. Der Arretierbolzen 71 ist in einer Bohrung der Halterung angeordnet, wobei die Längsachse des Arretierbolzens 71 quer zur Längsachse der Nut 24 verläuft. Der Arretierbolzen 71 ragt im arretierten Zustand in eine randseitige Ausnehmung bzw. Vertiefung des Befestigungsmittels 50 hinein, wobei das Federelement 72 den Arretierbolzen 71 in diese randseitige Ausnehmung 73 hineindrückt. Zum Lösen der Halterung 20 von der Projektionsfläche 10 kann der Arretierbolzen 71 gegen die Federkraft des Federelements 72 aus der randseitigen Ausnehmung 72 des Befestigungsmittels 50 herausgezogen werden, sodass die Halterung 20 nach oben hin abgenommen werden kann.

Das in die randseitige Ausnehmung 73 hineinragende Ende des Arretierbolzens 71 kann an der Unterseite abgeschrägt sein, sodass beim Aufsetzen der Halterung 20 auf die Projektionsfläche 10 der Arretierbolzen 71 gegen die Federkraft des Federelements 72 nach außen gedrückt wird. Die Halterung 20 kann dann nach unten geschoben werden und bei Erreichen der Befestigungsposition rastet der Arretierbolzen 71 bedingt durch die Federkraft des Federelements 72 in die randseitige Ausnehmung 73 des Befestigungsmittels 50 ein.

In einer besonderen Ausführungsform der vorliegenden Erfindung kann das Arretiermittel mit einem Schließmechanismus versehen sein, der in einer Schließposition ein Bewegen des Arretierbolzens bzw. Arretierzapfens 71 gegen die Federkraft des Federelements 72 verhindert. Dadurch kann ein unberechtigtes Lösen der Halterung 20 von der Projektionsfläche 10 verhindert werden. Der Schließmechanismus kann beispielsweise ein in den Arretierbolzen 71 integriertes Zylinderschloss aufweisen, das mit einem Schlüssel abschließbar ist.

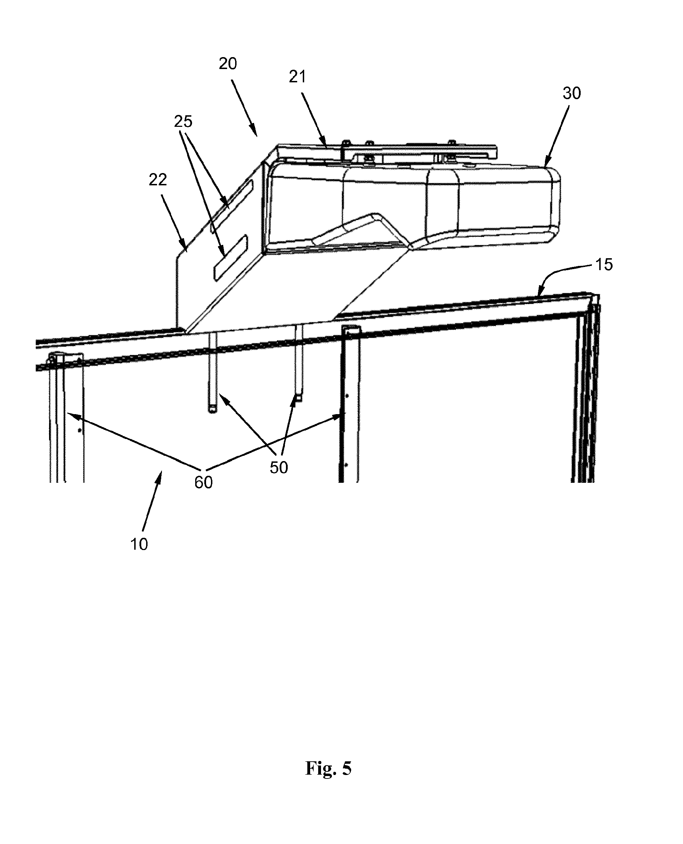

Fig. 5 zeigt eine konkrete Ausgestaltung eines erfindungsgemäßen Projektionssystems in einer perspektivischen Ansicht.

Die Halterung 20 bzw. der zweite Teil 22 der Halterung ist an der oberen Stirnfläche bzw. oberen Stirnseite der Projektionsfläche 10 angeordnet, wobei die obere Stirnseite 15 der Projektionsfläche in eine dafür vorgesehene Nut am zweiten Teil 22 der Halterung 20 in Eingriff gebracht ist. Gezeigt sind in Fig. 5 auch die beiden in die Projektionsfläche 10 integrierten Befestigungsmittel 50, die an der oberen Stirnfläche 15 der Projektionsfläche 10 hervorstehen und in dafür vorgesehene Sacklöcher am zweiten Teil 22 der Halterung 20 eingreifen. Ebenfalls gezeigt sind die an der Rückseite der Projektionsfläche 10 angeordneten Laufschienen 60, entlang derer die Projektionsfläche 10 in der Höhe verstellt werden kann.

Der zweite Teil 22 der Halterung 20 ist als Gehäuse ausgebildet, wobei hier an einer Seitenwandung zwei Zugangsöffnungen 25 vorgesehen sind, die einen Zugang zu Peripherieanschlüssen einer in dem Gehäuse angeordneten Datenverarbeitungseinrichtung ermöglichen oder die als Lüftungsschlitze vorgesehen sein können, um eine Luftzirkulation für eine im Gehäuse angeordnete Datenverarbeitungseinrichtung zu ermöglichen.

Die Projektionseinrichtung 30 ist in der hier gezeigten konkreten Ausgestaltung der Erfindung über drei Schraubverbindungen an dem ersten Teil 21 der Halterung 20 befestigt. Es können auch andere Befestigungsmittel als die in Fig. 5 gezeigten Schrauben vorgesehen sein. Beispielsweise können sogenannte Clips-Verbindungen verwendet werden, die ein einfaches Befestigen der Projektionseinrichtung an dem ersten Teil 21 der Halterung ermöglichen bzw. ein einfaches Lösen der Projektionseinrichtung 30 von dem ersten Teil 21 der Halterung ermöglichen.

Die Projektionsfläche 10 kann einen umlaufenden Rahmen aufweisen, der aus einem stabilen Material, etwa Metall, gefertigt ist. Der umlaufende Rahmen verleiht der Projektionsfläche 10 insbesondere im Bereich der oberen Stirnfläche zusätzliche Stabilität, um die Halterung 20 noch sicherer an der Projektionsfläche 10 zu befestigen. Der umlaufende Rahmen ist hierbei Teil der Projektionsfläche 10.

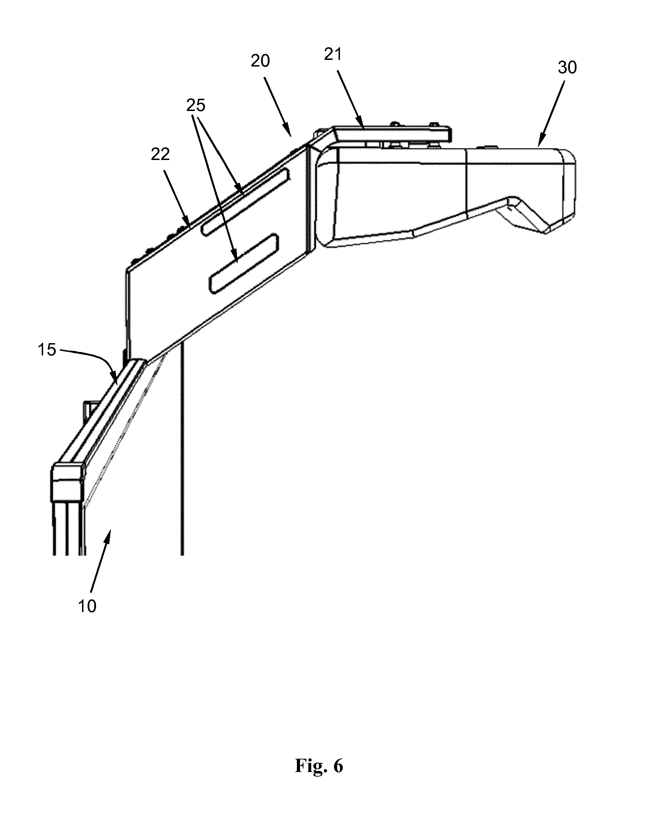

**Fig. 6** zeigt das in Fig. 5 gezeigte erfindungsgemäße Projektionssystem in einer Seitenansicht.

Besonders gut erkennbar ist hier, dass der zweite Teil 22 der Halterung 20 als Parallelogramm ausgestaltet ist, wobei an dem oberen Ende des zweiten Teils 22 der horizontal verlaufende erste Teil 21 angeordnet ist, sodass die Längsachse des ersten Teils 21 in einem bestimmten Winkel zur Längsachse des zweiten Teils 22 verläuft.

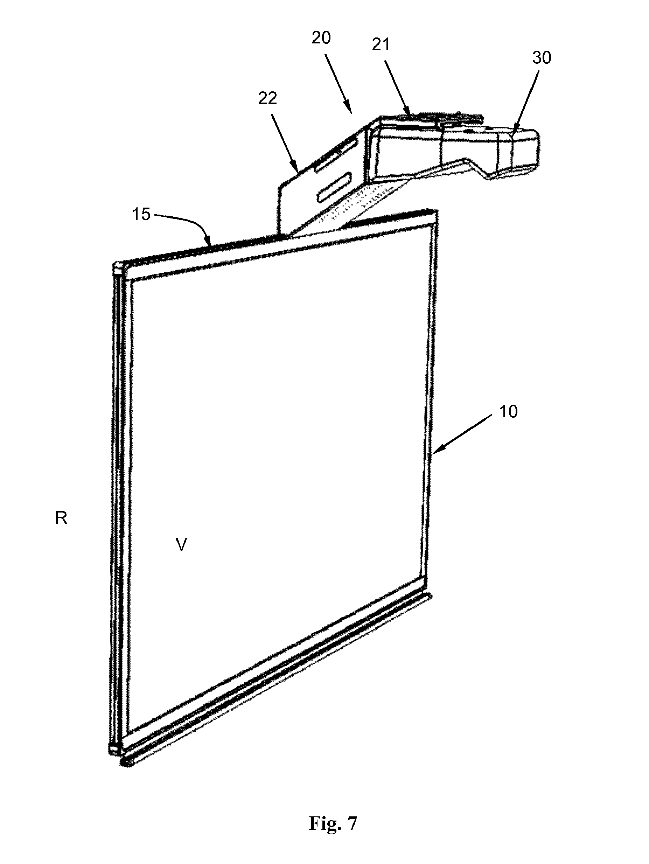

Fig. 7 zeigt das in Fig. 6 gezeigte Projektionssystem in einer perspektivischen Ansicht, wobei hier die gesamte Projektionsfläche 10 dargestellt ist. Erkennbar ist in Fig. 7 der um die Projektionsfläche umlaufende Rahmen, wobei der Rahmen Bestandteil der Projektionsfläche 10 ist. Im unteren Bereich der Projektionsfläche 10 kann eine Ablageschiene angeordnet sein, um beispielsweise Stifte abzulegen.

Vorstehend ist das erfindungsgemäße Projektionssystem bzw. erfindungsgemäße Projektionsvorrichtung im Zusammenhang mit Befestigungsmittel 15 beschrieben worden, die in die Projektionsfläche 10 integriert sind und an der oberen Stirnfläche der Projektionsfläche 10 hervorstehen. Dadurch, dass die Projektionsfläche 10 selbsttragend ausgestaltet ist, kann in einer besonderen Ausgestaltung der Erfindung auf die Befestigungsmittel 50 auch verzichtet werden, da der Formschluss zwischen der oberen Stirnfläche der Projektionsfläche 10 und der an der Halterung 20 vorgesehenen Nut ausreicht, um die Halterung 20 sicher und stabil an der Projektionsfläche 10 zu befestigen. Wenn keine Befestigungsmittel 50 vorgesehen sind, kann die Halterung 50 zudem in Längsrichtung der oberen Stirnfläche 15 relativ zur Projektionsfläche 10 verschoben werden bzw. an unterschiedlichen Positionen an der oberen Stirnfläche 15 der Projektionsfläche 10 aufgesetzt werden.

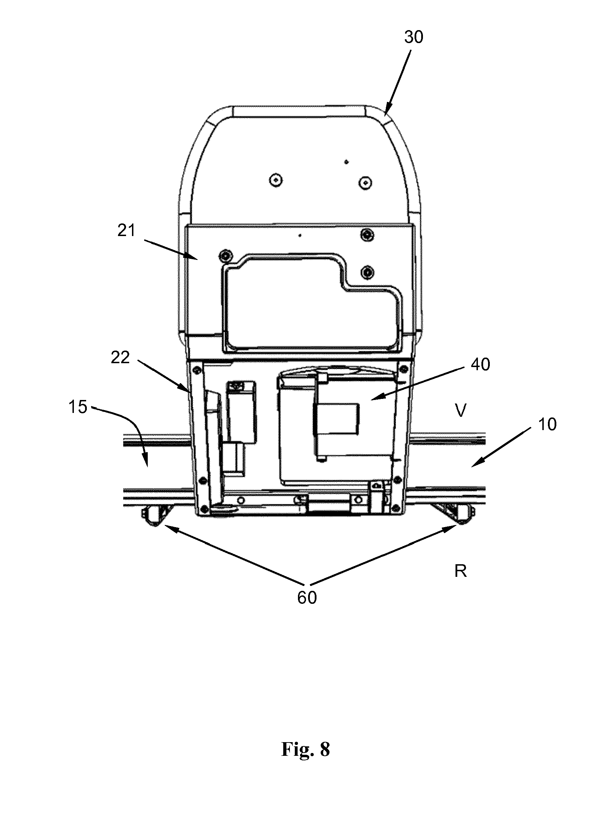

**Fig. 8** zeigt ein erfindungsgemäßes Projektionssystem in einer Ansicht von oben, wobei der zweite Teil 22 der Halterung 20 ohne Abdeckung gezeigt ist. Erkennbar ist hier, die Ausgestaltung des zweiten Teils 22 der Halterung 20 als Gehäuse, in dem eine Datenverarbeitungseinrichtung 40 angeordnet ist. Die Projektionseinrichtung 30 ist über drei Schraubverbindungen an dem ersten Teil 21 der Halterung 20 befestigt.

An der Rückseite R der Projektionsfläche 10 sind zwei Laufschienen vorgesehen, an denen die Projektionsfläche 10 höhenverstellbar angeordnet ist. Dadurch, dass die Halterung 20 an der Projektionsfläche 10 befestigbar ist und die Projektionsfläche 10 höhenverstellbar ist, ist gewährleistet, dass bei einer Höhenverstellung der Projektionsfläche 10 die relative Position der Projektionseinrichtung 30 zur Projektionsfläche 10 beibehalten bleibt.

In einer Ausgestaltung der Erfindung, können an den Seitenwandungen der Halterung 20 Lautsprecher angeordnet sein, die vorzugsweise mit der Datenverarbeitungseinrichtung 40 gekoppelt sind.

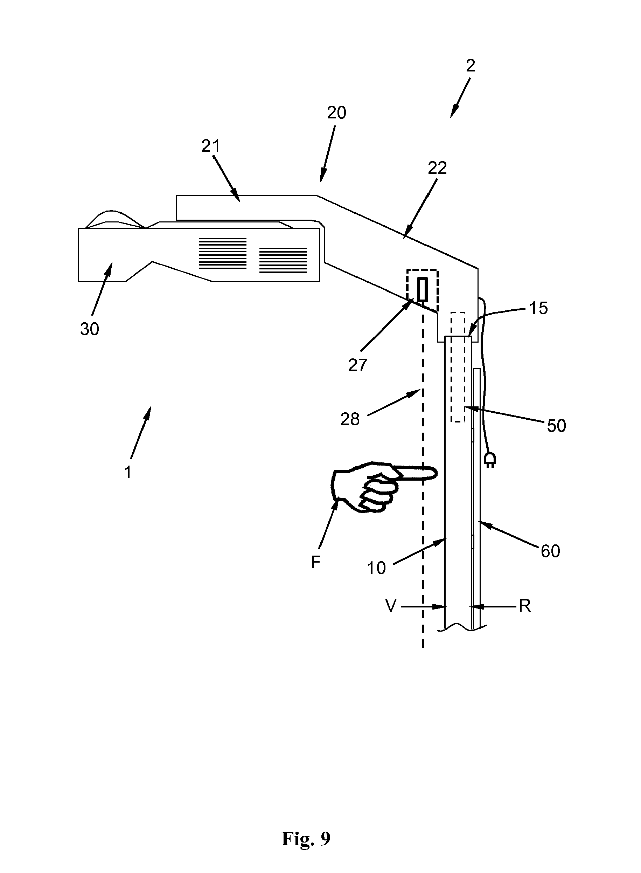

**Fig. 9** zeigt eine alternative Ausgestaltung eines erfindungsgemäßen Projektionssystems in einer Seitenansicht, wobei in der erfindungsgemäßen Halterung 20 eine Detektionseinrichtung 27 zur Detektion eines Gegenstandes F relativ zur Projektionsfläche 10 vorgesehen ist

Die Detektionseinrichtung 27 umfasst hier eine Sende- bzw. eine Transmittereinheit, die angepasst ist, Lichtstrahlen, insbesondere Laserstrahlen zu emittieren. Die emittierten Licht- bzw. Laserstrahlen bilden vor der Projektionsfläche 10 einen weitgehend unsichtbaren Lichtvorhang 28, der im Wesentlichen parallel und in einem vorbestimmten Abstand zur Projektionsfläche 10 verläuft.

Gelangt ein Gegenstand, etwa ein Stift oder ein Finger F in den Lichtvorhang 28 werden die Licht- bzw. Laserstrahlen von dem Finger F unterbrochen bzw. die auf den Finger auftreffenden Licht- bzw. Laserstrahlen werden von dem Finger reflektiert.

Die Detektionseinrichtung 27 umfasst hier ferner eine Empfängereinheit, die angepasst ist, die von dem Finger F reflektierten Licht- bzw. Laserstrahlen zu empfangen und einer Auswertung zuzuführen. Die Auswertung kann anhand der reflektierten Licht- bzw. Laserstrahlen die Position des Fingers relativ zur Projektionsfläche 10 ermitteln. Die Empfängereinheit kann hierbei eine Kamera umfassen, die operativ mit einer Auswerteeinheit gekoppelt ist. In einer Ausgestaltung der Erfindung können auch mehrere Kameras vorgesehen sein, etwa horizontal zueinander versetzte Kameras, um etwa auch die Positionen zweier vertikal übereinander angeordneter Finger zu ermitteln, die vertikal unterhalb der einen Kamera angeordnet sind.

Die Auswertung kann eine Bildverarbeitung umfassen, die angepasst ist, aus einem oder mehreren Bildern oder aus einer Sequenz von Bildern (Videoaufnahmen) die Position des Fingers relativ zur Projektionsfläche 10 ermitteln, indem in den Bildern die reflektierten Licht- bzw. Laserstrahlen ausgewertet werden.

In einer alternativen Ausgestaltung der Erfindung kann die Sendeeinheit einen Infrarotsender und die Empfangseinheit einen Infrarotempfänger aufweisen.

Als vorteilhaft hat es sich erwiesen, wenn die Auswerteeinheit angepasst ist, Bewegungen des Fingers zu detektieren. Damit kann eine Gestenerkennung realisiert werden, sodass beispielsweise der Beamer 30 anhand von Fingergesten und/oder Handgesten gesteuert werden kann. Zusätzlich oder alternativ kann mit Hilfe solcher detektierter Gesten auch gesteuert werden, was an der Projektionsfläche angezeigt wird. So kann etwa mit Hilfe einer von rechts nach links ausgeführten Wischgeste das nächste Bild bzw. die nächste Folie einer Präsentation eingeblendet werden.

### Bezugszeichenliste:

- 1: Projektionssystem
- 2: Projektionsvorrichtung
- 10: Projektionsfläche
- 15: obere Stirnfläche der Projektionsfläche
- 20: Halterung
- 21: erster Teil der Halterung
- 22: zweiter Teil der Halterung
- 23a: in die Vorderseite der Projektionsfläche hineinragender Teil des zweiten Teils der Halterung
- 23b: in die Rückseite der Projektionsfläche hineinragender Teil des zweiten Teils der Halterung
- 24: Nut
- 25: Zugangsöffnung in der Halterung
- 26: Sackloch
- 27: Detektionseinrichtung
- 28: Laserstrahlen bzw. Lichtvorhang
- 30: Projektionseinrichtung, z.B. Beamer
- 40: Datenverarbeitungseinrichtung
- 45: Peripherieanschlüsse der Datenverarbeitungseinrichtung
- 50: Befestigungsmittel, z.B. Bolzen oder Zapfen
- 60: Laufschienen
- 70: Arretiermittel
- 71: Arretierbolzen bzw. -zapfen
- 72: Federelement
- 73: randseitige Ausnehmung bzw. Vertiefung des Befestigungsmittels
- 80: erste Strom- und/oder Datenkabel
- 81: zweite Strom- und/oder Datenkabel
- α: Winkel
- A-A: Schnittachse
- DA: Drehachse
- F: Finger bzw. Stift
- LA: Längsachse der Halterung
- R: Rückseite der Projektionsfläche
- V: Vorderseite der Projektionsfläche

## Patentansprüche

1. Halterung (20) zum Anordnen einer Projektionseinrichtung (30) an einer Projektionsfläche (10), **dadurch gekennzeichnet, dass**
- die Halterung einen ersten Teil (21) und einen zweiten Teil (22) umfasst,
- der erste Teil im Wesentlichen horizontal ausgerichtet ist, in einem vorbestimmten Winkel (α) an dem zweiten Teil angeordnet ist und zur Aufnahme der Projektionseinrichtung ausgestaltet ist, und
- der zweite Teil an einer oberen Stirnfläche (15) der Projektionsfläche anordenbar ist und mit einem Verbindungsmittel lösbar mit der Projektionsfläche verbindbar ist.

2. Halterung nach Anspruch 1, **dadurch gekennzeichnet, dass** das Verbindungsmittel
- eine am zweiten Teil (22) quer zur Längsachse (LA) der Halterung verlaufende durchlaufende Nut (24) umfasst, in die die obere Stirnfläche (15) der Projektionsfläche im Wesentlichen formschlüssig in Eingriff bringbar ist, und/oder
- ein senkrecht zur oberen Stirnfläche (15) der Projektionsfläche verlaufendes Sackloch (26) umfasst, zur Aufnahme eines an der oberen Stirnfläche (15) der Projektionsfläche (10) angeordnetes Befestigungsmittel (50), und/oder
- ein senkrecht zur oberen Stirnfläche (15) der Projektionsfläche angeordnetes Befestigungsmittel (50) umfasst.

3. Halterung nach Anspruch 2, **dadurch gekennzeichnet, dass** in der Nut (24) zumindest ein senkrecht zur Längsachse der Nut stehendes Befestigungsmittel (50) angeordnet ist.

4. Halterung nach einem der Ansprüche 2 oder 3, **dadurch gekennzeichnet, dass** die Befestigungsmittel (50) Bolzen oder Zapfen, vorzugsweise mit rundem oder rechteckigen Querschnitt, umfassen.

5. Halterung nach einem der vorhergehenden Ansprüche, **dadurch gekennzeichnet, dass** der zweite Teil (22) als Gehäuse ausgebildet ist, wobei im Inneren des Gehäuses eine Datenverarbeitungseinrichtung (40) anordenbar ist, die, vorzugsweise über ein zweites Daten- und/oder Stromkabel (81), operativ mit der Projektionseinrichtung (30) koppelbar ist, wobei der erste Teil (21) und der zweite Teil (22) vorzugsweise einteilig ausgestaltet sind.

6. Halterung nach einem der vorhergehenden Ansprüche, wobei die Übertragung der an die Projektionsfläche (10) zu projizierenden Daten an die Projektionseinrichtung (30) über eine drahtlose Datenverbindung erfolgt.

7. Halterung nach einem der vorhergehenden Ansprüche, **dadurch gekennzeichnet, dass** Arretiermittel (70) vorgesehen sind, zum Arretieren der Halterung an der oberen Stirnfläche (15) der Projektionsfläche.

8. Halterung nach einem der vorhergehenden Ansprüche, wobei an oder in der Halterung (20), vorzugsweise an oder in dem zweiten Teil (22) der Halterung (20) eine Detektionseinrichtung (27) vorgesehen ist, wobei die Detektionseinrichtung (27) angepasst ist, einen sich relativ zur Projektionsfläche (10) bewegenden oder an der Projektionsfläche angeordneten Gegenstand, insbesondere Finger oder Stift (F) zu detektieren.

9. Halterung nach dem vorhergehenden Anspruch, wobei die Detektionseinrichtung (27) zumindest eine Sendeeinheit und zumindest eine Empfangseinheit umfasst, wobei die Sendeeinheit angepasst ist, vor der Projektionsfläche (10) in einem vorbestimmten Abstand und im Wesentlichen parallel zur Projektionsfläche (10) einen Lichtvorhang aus Lichtstrahlen zu erzeugen, der die Projektionsfläche (10) weitestgehend abdeckt, und wobei die Empfangseinheit angepasst ist, von dem Gegenstand reflektierte Lichtstrahlen zu empfangen.

10. Halterung nach dem vorhergehenden Anspruch, wobei die Detektionseinrichtung (27) angepasst ist, die reflektierten Lichtstrahlen auszuwerten und aus den reflektierten Lichtstrahlen eine Position des Gegenstandes relativ zur Projektionsfläche (10) zu ermitteln.

11. Projektionssystem (1) umfassend eine Halterung (20) nach einem der vorhergehenden Ansprüche und eine Projektionseinrichtung (30), wobei die Projektionseinrichtung an dem ersten Teil (21), vorzugsweise an einer Unterseite des ersten Teils, angeordnet ist.

12. Projektionsfläche (10), die im Wesentlich selbstragend ausgestaltet ist, mit einer oberen Stirnfläche (15), **dadurch gekennzeichnet, dass** an der oberen Stirnfläche Verbindungsmittel vorgesehen sind zum lösbaren Verbinden einer Halterung, insbesondere nach einem der Ansprüche 1 bis 10, mit der Projektionsfläche.

13. Projektionsfläche nach Anspruch 12, **dadurch gekennzeichnet, dass** die Verbindungsmittel
- Befestigungsmittel (50) umfassen, die im Wesentlichen senkrecht auf der Stirnfläche stehen, wobei die Befestigungsmittel (50) vorzugsweise Bolzen oder Zapfen, vorzugsweise mit rundem oder rechteckigem Querschnitt, umfassen, und/oder
- eine Nut umfassen, die längs an der oberen Stirnfläche (15) der Projektionsfläche ausgebildet ist

14. Projektionsfläche nach Anspruch 13, **dadurch gekennzeichnet, dass** die Befestigungsmittel (50) zwischen einer Vorderseite (V) der Projektionsfläche und einer Rückseite (R) der Projektionsfläche in die Projektionsfläche integriert sind und zumindest teilweise aus der oberen Stirnfläche (15) herausragen.

15. Projektionsvorrichtung (2) umfassend eine Projektionsfläche (10), insbesondere nach einem der Ansprüche 12 bis 14, und eine Halterung (20) nach einem der Ansprüche 1 bis 10, wobei die Halterung mit einem Verbindungsmittel lösbar mit der Projektionsfläche verbindbar ist.
